# EUROPÄISCHE PATENTANMELDUNG

(11) **EP 2 600 453 A1**
(43) Veröffentlichungstag der Anmeldung: **05.06.2013**
(21) Anmeldenummer: 11191536.9
(22) Anmeldetag: 01.12.2011
(51) Int. Cl.: H01M 8/04, F16K 27/00

(54) **Brennstoffzellenblock**

(71) Anmelder: Siemens Aktiengesellschaft, 80333 München (DE)
(72) Erfinder: Bärnreuther, Frank, 90419 Nürnberg (DE); Dörfler, Stefan, 90513 Zirndorf (DE); Hoffmann, Joachim, 90559 Burgthann (DE); Mattejat, Arno, 91056 Erlangen (DE)

(57) **Zusammenfassung**

Die Erfindung bezieht sich auf einen Brennstoffzellenblock (1) mit einer den Brennstoffzellenblock (1) mit einem Betriebsmittel (2) versorgenden Betriebsmittelversorgungseinheit (3).

Erfindungsgemäß ist weiter vorgesehen, dass die Betriebsmittelversorgungseinheit (3) eine integrierte Ventilbaugruppe (4) mit mindestens einem ersten Ventil (5) und einem zweiten Ventil (6) aufweist. Sowohl das erste Ventil (5) als auch das zweite Ventil (6) sind dabei in - von beiden Ventilen (5, 6) gemeinsam genutzte - Anschlusselemente (7, 8) integriert.

## Beschreibung

Die Erfindung bezieht sich auf einen Brennstoffzellenblock mit einer den Brennstoffzellenblock mit einem Betriebsmittel versorgenden Betriebsmittelversorgungseinheit

Bei der Elektrolyse von Wasser werden Wassermoleküle durch elektrischen Strom in Wasserstoff (H2) und Sauerstoff (02) zerlegt.

In einer Brennstoffzelle läuft unter anderem dieser Vorgang in umgekehrter Richtung ab. Durch eine elektrochemische Verbindung von Wasserstoff und Sauerstoff zu Wasser entsteht elektrischer Strom mit hohem Wirkungsgrad und, wenn als Brenngas reiner Wasserstoff eingesetzt wird, ohne Emission von Schadstoffen und Kohlendioxid (CO2).

Zum Betrieb werden einer Brennstoffzelle Betriebsmittel zugeführt, wie z. B. Betriebsgase.

Als Betriebsgase dienen ein wasserstoffhaltiges Brenngas und ein sauerstoffhaltiges Oxidationsgas. Als Brenngase können beispielsweise Erdgas, Kohlegas oder auch reiner Wasserstoff verwendet werden. Als Oxidationsgas findet in der Regel Luft oder reiner Sauerstoff Verwendung.

Bei der Zuführung solcher Betriebsgase in eine Brennstoffzelle stehen diese meist unter Druck, beispielsweise bis zu ca. 4 bar - 6 bar.

Eine einzelne Brennstoffzelle liefert eine Betriebsspannung von maximal etwa 1,1 V. Daher wird eine Vielzahl von Brennstoffzellen zu einer Brennstoffzellenstapel zusammengeschlossen, der Bestandteil eines Brennstoffzellenblocks ist. Durch ein In-Reihe-Schalten der Brennstoffzellen kann die Betriebsspannung eines Brennstoffzellenblocks 100 V und mehr betragen.

Ein Brennstoffzellenblock umfasst außer mindestens einem Brennstoffzellenstapel auch ein sogenanntes Betriebsteil - auch Versorgungsteil genannt.

Das Versorgungsteil beherbergt eine Vielzahl von separaten Aggregaten wie beispielsweise Pumpen und Verdichter sowie eine Vielzahl von einzelnen Vorrichtungen wie Ventile, Sensoren, elektronische Überwachungseinrichtungen und einiges mehr. Diese zum Teil verteilt im Brennstoffzellenblock angeordneten Bauteile stehen größtenteils über Verbindungen, wie Druck- oder andere fluidtechnische Versorgungsleitungen wie auch elektrische Verbindungen, miteinander in Verbindung.

Unter anderem dient das Versorgungsteil auch dazu den Brennstoffzellenblock und damit den Brennstoffzellenstapel bzw. die Brennstoffzellen mit den Betriebsmitteln, insbesondere den unter Druck stehenden Betriebsgasen, zu versorgen.

Bei Störungen und oder Ausfällen einzelner Bauteile des Versorgungsteils muss in den meisten Fällen der gesamte Brennstoffzellenblock mehr oder minder komplett zerlegt werden, um an die defekten Bauteile zu gelangen und diese auszutauschen.

Auch bedarf dies in der Regel speziell geschulten Personals und speziellen Werkzeugs, so dass solche Reparaturen meist nicht "vor Ort" durchgeführt werden können, sondern bei einem Hersteller des Brennstoffzellenblocks bzw. in einem Herstellwerk des Herstellers durchgeführt werden müssen. Dazu ist es wiederum erforderlich, den defekten Brennstoffzellenblock zum Hersteller zu schicken bzw. dorthin zu transportieren.

Dies alles ist aufwendig, wie auch kosten- und zeitintensiv. Der Erfindung liegt die Aufgabe zugrunde, einen Brennstoffzellenblock anzugeben, bei dem Reparaturen an defekten Bauteilen einfach und kostengünstig durchgeführt werden können.

Diese Aufgabe wird durch einen Brennstoffzellenblock mit den Merkmalen gemäß dem unabhängigen Patentanspruch gelöst.

Der Brennstoffzellenblock weist eine den Brennstoffzellenblock mit einem Betriebsmittel versorgenden Betriebsmittelversorgungseinheit auf.

Die Betriebsmittelversorgungseinheit weist eine integrierte Ventilbaugruppe mit mindestens einem ersten Ventil und einem zweiten Ventil auf. Sowohl das erste Ventil als auch das zweite Ventil sind dabei in - von beiden Ventilen gemeinsam genutzte - Anschlusselemente integriert.

Unter einer Betriebsmittelversorgungseinheit wird eine Vorrichtung mit meist mehreren Bauteilen verstanden, mit deren Hilfe ein Betriebsmittel, wie ein Betriebsgas, wie beispielsweise Wasserstoff oder Sauerstoff, dem Brennstoffzellenblock, insbesondere einem Brennstoffzellenstapel bzw. einer Brennstoffzelle dieses Brennstoffzellenblocks, zugeführt werden kann.

Insbesondere gewährleistet eine solche Betriebsmittelversorgungseinheit, dass die Betriebsmittel hinsichtlich Menge und/oder Zustand beeinflussbar dem Brennstoffzellenblock zugeführt werden können.

Dabei kann der beeinflussbare Zustand des Betriebsmittels ein Druck des Betriebsmittels, insbesondere ein Betriebsgasdruck, sein.

Eine solche einflussnehmende Betriebsmittelversorgungseinheit weist beispielsweise ein oder mehrere Ventile, wie elektrisch, elektromagnetische, elektromotorisch, pneumatisch oder hydraulisch betätigte Ventile auf, mittels welchem bzw. welchen ein Zufluss eines Betriebsgases zu der Brennstoffzellenblock hinsichtlich der Zuflussmenge und/oder Zuflussdrucks beeinflussbar ist.

Auch kann die einflussnehmende Betriebsmittelversorgungseinheit eine Sensorik aufweisen, beispielsweise einen Sensor, wie z. B. einen Temperaturfühler, einen Messwertgeber, einen Druckmesser oder einen Niveaugeber, mittels welcher Zustandsparameter des zugeführten Betriebsmittels messbar und/oder beeinflussbar sind.

Auch Anschlusselemente und/oder Verbindungselemente - beides im Folgenden nur als Anschlusselemente bezeichnet, welche die Bauteile der Betriebsmittelversorgungseinheit untereinander und/oder die Betriebsmittelversorgungseinheit bzw. deren Bauteile mit anderen Bauteilen des Brennstoffzellenblocks verbinden, wie beispielsweise Platten, Träger, Flansche, Rohre, Schläuche und ähnliches, können zu der Betriebsmittelversorgungseinheit zählen.

Unter integriert soll verstanden werden, dass dadurch ein zusammengehöriges, als Ganzes funktionsfähiges Modul oder Baugruppe ausgebildet wird. Insbesondere kann dann ein solches Modul oder Baugruppe als Ganzes montiert/demontiert bzw. ein- oder ausgebaut werden.

So kann die Integration der beiden Ventile in die gemeinsam genutzten Anschlusselemente - und dadurch Ausbildung der integrierten Ventilgruppe - bedeuten, dass die beiden Ventile an oder bei den Anschlusselementen angeordnet bzw. angebracht sind, wobei die Anschlusselemente - um die Funktionsfähigkeit des Moduls bzw. der Baugruppe als Ganzes herzustellen (Integration) - entsprechend ausgebildet bzw. ausgestaltet sind. Anschlusselemente, Durchführungen oder derartiges Anderes können dort ausgebildet sein. Gegebenenfalls können weitere Anschlusselemente, Durchführungen oder derartiges Anderes - zur Modul- oder Baugruppenbildung - an den Anschlusselementen angeordnet sein.

Die Erfindung geht von der Überlegung aus, dass ein Reparaturaufwand bei dem Brennstoffzellenblock umso höher ist, je mehr einzelne und separat eingebaute bzw. einzubauende Bauteile bei dem Brennstoffzellenblock vorhanden sind. Insbesondere bei zahlreichen, zum Teil hochkomplexen und fehleranfälligen Bauteilen der Betriebsmittelversorgungseinheit eines Brennstoffzellenblocks spielt diese Überlegung eine wesentliche Rolle.

Ausgehend davon geht die Erfindung weiter von der Überlegung aus, dass eine Zusammenfassung von, insbesondere technisch, funktionell, technisch-funktionell und/oder organisatorisch zusammengehörigen Bauteilen zu einer Bauteilgruppe bzw. Modul einen Aufbau eines im Allgemeinen Betriebsteils bzw. des Brennstoffzellenblocks erheblich vereinfacht.

Insbesondere hoch integrierte Bauteilgruppen können "von au-βen" - als Ganzes - gut zugänglich in ein Betriebsteil bzw. in den Brennstoffzellenblock eingebaut und im Versagensfall - auch vor Ort bei einem Kunden - mit geringem Aufwand ausgebaut bzw. gewechselt werden.

Damit verkürzt sich, auch weil ein Rücktransport des Brennstoffzellenblocks zum Hersteller entfallen kann, eine Ausfallszeit einer solchen Bauteilgruppe.

Anschaulich und vereinfacht ausgedrückt, dadurch, dass bei der Erfindung sowohl das erste als auch das zweite Ventil in dieselben Anschlusselemente integriert sind und dieselben Anschlusselemente benutzen, kann dadurch eine (integrierte) Ventilbaugruppe ausbildet werden, welche als komplette, technisch, funktionell, technisch-funktionell und/oder organisatorisch zusammengehörige und geschlossene Bauteilgruppe bzw. Modul einfach von dem Brennstoffzellenblock - als Ganzes - demontiert und ausgetauscht werden kann.

Bevorzugte Weiterbildungen der Erfindung ergeben sich auch aus den abhängigen Ansprüchen.

Besonderes bevorzugt ist das erste Ventil ein Hauptventil, beispielsweise in Art eines Kugelventils bzw. eines Kugelhahns, und das zweite Ventil ein, insbesondere zu dem Hauptventil gehöriges, Bypassventil, beispielsweise in Art eines elektrisch, pneumatisch, hydraulisch oder elektromagnetisch betätigbaren Ventils.

Hierbei soll die Zugehörigkeit des Bypassventils zu dem Hauptventil daraus resultieren, dass das Bypassventil in einer Bypass-Zuführung, kurz nur Bypass, zu einer Hauptzuführung desselben Betriebsmittels, welche Hauptzuführung dann über das Hauptventil läuft, angeordnet ist.

Üblicherweise erfolgt die Zuführung eines Betriebsgases, wie des Wasserstoffs oder des Sauerstoffs, in den Brennstoffzellenblock unter Druck, beispielsweise unter ca. 4 bar - 6 bar.

Um verschiedene Betriebszustände, wie Betriebsstillsetzungen zu realisieren, muss die Medienzufuhr bzw. Betriebsgaszufuhr durch ein Ventil (Hauptventil), beispielsweise ein Kugelventil, absperrbar sein. Liegt nun in dem Brennstoffzellenblock ein niedrigerer Druck als in der Zuführung vor, z. B. wegen einer Evakuierung, so kommt es beim (Wieder-)Öffnen eines großen Ventilquerschnitts des Absperrventils zu einem Druckstoß in dem Brennstoffzellenblock. Diese Beanspruchung kann zu Beschädigungen führen.

Um diese Druckdifferenz im Betriebsgas - vor und nach dem Kugelventil (Hauptventil) ― wieder abzubauen und damit das Kugelventil ― ohne die Gefahr von Druckschädigungen an dem Brennstoffzellenblock - wieder öffnen zu können, sieht man einen Bypass mit einem, beispielsweise elektromagnetisch betätigten, Bypassventil (Nebenventil oder auch nur Bypassventil) für das Betriebsgas vor. Dieses ist im Normalbetrieb des Brennstoffzellenblocks geschlossen.

Über diesen Bypass kann - bei dann geöffnetem Bypassventil - ein langsamer Druckausgleich vor und nach dem Hauptventil bzw. in der Betriebsmittelzuführung bewirkt werden. Dazu ist es zweckmäßig, dass ein Ventilquerschnitt des Bypassventils kleiner, insbesondere wesentlich kleiner, als ein Ventilquerschnitt des Hauptventils ist, beispielsweise um den Faktor 2 oder den Faktor 5 oder auch um den Faktor 10 oder den Faktor 15 kleiner ist. So kann beispielsweise vorgesehen sein, dass bei einem Hauptventilquerschnitt von ca. 15 mm - 25 mm der Bypassventilquerschnitt mit ca. 2 mm realisiert ist.

Ist die Druckdifferenz abgebaut, dann kann das Kugelventil wieder gefahrlos betätigt werden. Das Bypassventil wird dann wieder geschlossen.

Alternativ kann das Bypassventil auch der Zuführung sehr kleiner Volumenströme der Betriebsgase dienen.

Nach einer besonders bevorzugten Weiterbildung ist vorgesehen, dass dieses Hauptventil und dieses Bypassventil in die gemeinsam, d.h. von beiden, genutzte Anschlusselemente integriert sind. Die dadurch realisierte integrierte Ventilbaugruppe kann einfach, schnell und kostengünstig bei dem Brennstoffzellenblock montiert, demontiert und/oder ausgetauscht werden.

Ferner kann bevorzugt vorgesehen sein, dass die integrierte Ventilbaugruppe auch die Hauptzuführung für das Betriebsmittel und den Bypass für das Betriebsmittel aufweist, wobei das erste Ventil bzw. das Hauptventil die Betriebsmittelzuführung der Hauptzuführung beeinflusst und das zweite Ventil bzw. das Bypassventil die Betriebsmittelzuführung im Bypass beeinflusst.

Auch kann die Erfindung bevorzugt vorsehen, dass das erste und das zweite Ventil, insbesondere das Hauptventil und das Bypassventil, beidseitig von den Anschlusselementen, beispielsweise von zwei Plattenelementen, begrenzt werden. Vereinfacht und anschaulich ausgedrückt, die beiden Ventile sind zwischen zwei solchen (Anschluss-)Platten angeordnet, was eine sehr kompakte Bauform einer solchen Ventilbaugruppe ermöglicht.

Auch die Anordnung von nur einem der beiden Ventile zwischen zwei solchen Plattenelementen ist möglich, wobei dann vorzugsweise das andere, d.h. das nicht zwischen den beiden Plattenelementen angeordnete, Ventil unmittelbar außerhalb des Zwischenraums und/oder an einem der beiden Plattenelemente, beispielsweise auf einer Oberseite eines Plattenelements, angeordnet ist. Auch kann dieses außerhalb des Zwischenraums angeordnete andere Ventil seitlich des Zwischenraums und/oder seitlich der beiden Plattenelemente angeordnet sein.

Besonderes bevorzugt können diese Plattenelemente Flanschplatten sein. Diese können aus Metall oder auch aus Aluminium sein. Fertigungsverfahren und/oder Bearbeitungsverfahren, wie spanende Bearbeitung oder Umformen, insbesondere Tiefziehen, sind bekannt.

Nach einer weiteren bevorzugten Weiterbildung ist vorgesehen, dass an einem solchen Plattenelement bzw. an einer solchen Flanschplatte Anschlüsse und/oder Zuführungen und/oder in einem solchen Plattenelement bzw. einer solchen Flanschplatte Anschlüsse und/oder Durchführungen für ein Betriebsmittel bzw. ein Betriebsgas angebracht sind. Die Ventile können dann mit den Zuführungen, Durchführungen und/oder Anschlüssen verbunden bzw. an diese angeschlossen sein.

Durchführungen oder Zuführungen können beispielsweise Betriebsmittelzu-/-durchführungen, Abgasabführungen, Durchführungen zum Abgriff des erzeugten elektrischen Stroms oder von Messsignalen, beispielsweise in Form von Bohrungen, Rohrstücken oder Schlauchstücken, sein.

Nach einer weitern bevorzugten Weiterbildung ist vorgesehen, dass die integrierte Ventilbaugruppe ein drittes Ventil aufweist, mittels welchem das erste oder das zweite Ventil betätigbar ist, beispeisweise über einen pneumatischen Antrieb. So kann beispielsweise bei einem Kugelventil ― als erstes Ventil - ein dieses Kugelventil pneumatisch betätigendes Pilotventil, beispielsweise in Art eines elektrischen oder pneumatischen Ventils - als dieses dritte Ventil - vorgesehen sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Insbesondere sind diese Merkmale jeweils einzeln und in beliebiger geeigneter Kombination mit dem erfindungsgemäßen Verfahren und/oder mit der Vorrichtung gemäß dem jeweiligen unabhängigen Anspruch kombinierbar.

In Figuren sind Ausführungsbeispiele der Erfindung dargestellt, welche im Weiteren näher erläutert werden.

Es zeigen
- FIG 1: eine Ventilbaugruppe für einen Brennstoffzellenblock gemäß einem ersten Ausführungsbeispiel,
- FIG 2: eine vereinfachte Darstellung der Ventilbaugruppe gemäß dem ersten Ausführungsbeispiel,
- FIG 3: eine vereinfachte Darstellung der Ventilbaugruppe gemäß einem zweiten Ausführungsbeispiel,
- FIG 4: eine vereinfachte Darstellung der Ventilbaugruppe gemäß einem dritten Ausführungsbeispiel.

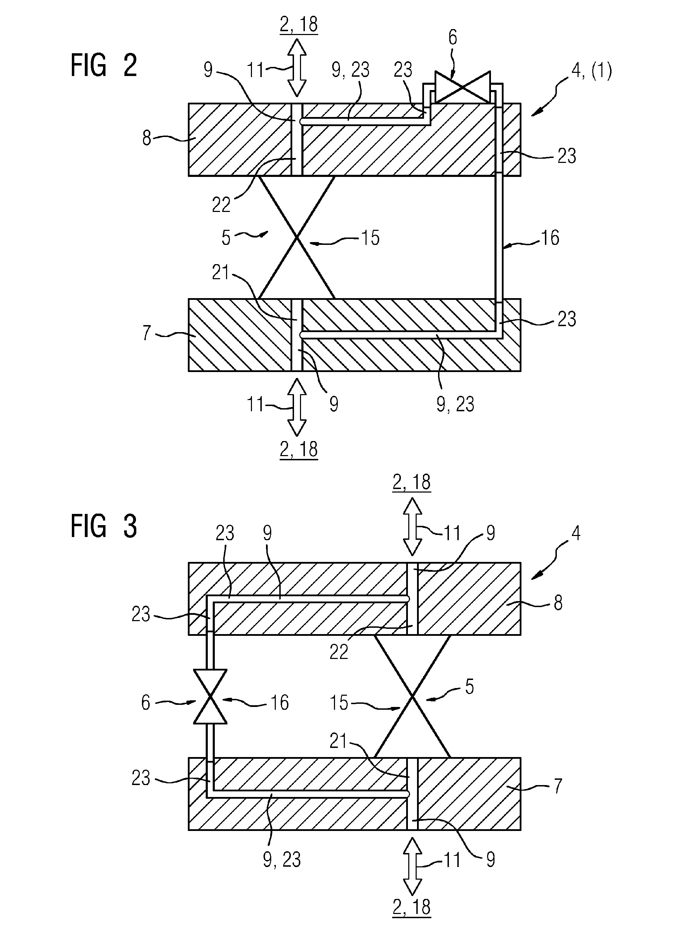

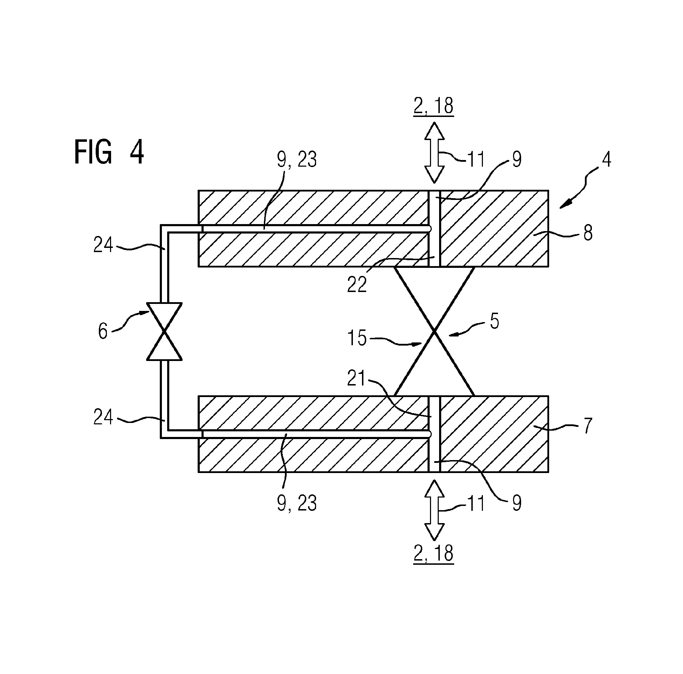

Ausführungsbeispiele: Integrierte Ventilbaugruppen bei einem Brennstoffzellenblock (FIGen 1 und 2 sowie FIG 3 und FIG 4) Einander entsprechende Gegenstände/Elemente bzw. Komponenten sind in den Figuren mit gleichen Bezugszeichen versehen.

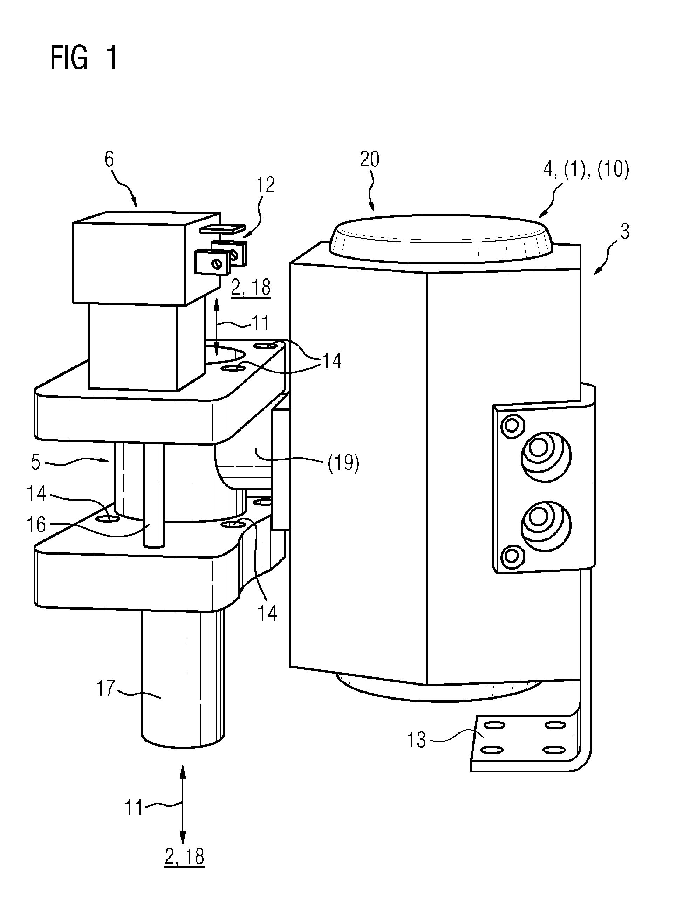

FIG 1 zeigt in einer räumlichen Darstellung eine integrierte Ventilbaugruppe 4 für die Versorgung eines Brennstoffzellenblocks 1 (nicht dargestellt) mit einem unter Druck, beispielsweise ca. 3,5 bar - 4 bar, stehenden Betriebsgas 2, hier zum Beispiel Wasserstoff.

FIG 2 verdeutlicht, neben FIG 1, den Aufbau dieser integrierten Ventilbaugruppe 4 sowie die Betriebsgas-Zu- bzw. Durchführung 18 durch diese integrierte Ventilbaugruppe 4 in einer vereinfachten Detaildarstellung.

Die integrierte Ventilbaugruppe 4 weist wie FIGen 1 und 2 zeigen als zentrale Bauteile ein Hauptventil 5, d.h. hier ein pneumatisch schaltbares Kugelventil 5 bzw. einen Kugelhahn 5, mit einem einen pneumatischen Antrieb 19 für das Kugelventil 5 aufweisenden Ventilkörper 20, ein Bypassventil 6 in Art eines Magnetventils 6, zwei Flanschplatten 7, 8, d.h. eine erste, hier in den FIGen 1 und 2 unten dargestellte Flanschplatte 7 und eine zweite, hier in den FIGen 1 und 2 oben dargestellte Flanschplatte 8, sowie ein - in FIG 1 nach außen sichtbares - Bypass-Rohr 16 auf.

In den beiden Flanschplatten 7, 8 sind verschiedene Bohrungen 9, d.h. zwei zentrale Durchgangsbohrungen 21, 22 sowie Durchmesser-kleinere Bypass-Bohrungen 23, eingebracht, welche einerseits einen Hauptdurchfluss 15 für das Betriebsgas 2 sowie andererseits einen zu dem Hauptdurchfluss 15 parallel geschalteten Bypassdurchfluss 16, kurz auch nur Bypass 16, für das Betriebsgas 2 durch die integrierte Ventilbaugruppe 4 ausbilden.

Dabei sind, wie die FIGen 1 und 2 zeigen, die zentralen (Durchgangs-)Bohrungen 21, 22 jeweils etwa in der Mitte einer Flanschplatte 7, 8 - und dort als jeweils durch die gesamte Dicke der Flanschplatte 7, 8 verlaufende (Durchgangs-)Bohrung 21, 22 eingebracht.

Die Bypassbohrungen 23 verlaufen einerseits innerhalb der Flanschplatten 7, 8, dort jeweils in etwa senkrecht zu der zentralen (Durchgangs-)Bohrung 21, 22, und verlassen dann die jeweilige Flanschplatte 7, 8 nach außen bzw. nach oben in etwa im Randbereich der jeweiligen Flanschplatte 7, 8. Eine weitere kleine Bypass-Bohrung 23 ist als Durchgangsbohrung auch in etwa im Randbereich der oberen Flanschplatte 8 angeordnet.

Wie FIG 1 und 2 weiter zeigen ist das Kugelventil 5 derart zwischen den beiden Flanschplatten 7, 8 angeordnet, dass Zu- und Abfluss zu bzw. aus dem Kugelventil 5 unmittelbar mit den zentralen (Durchgangs-)Bohrungen 21, 22 in den Flanschplatten 7, 8 verbunden sind, wodurch sich der Hauptdurchfluss 15 durch die integrierte Ventilbaugruppe 4 ausbildet.

Das Bypass-Rohr 16 sowie das Bypassventil 6 sind, wie die FIGen 1 und 2 zeigen, ebenfalls derart zwischen bzw. an den beiden Flanschplatten 7, 8 angeordnet, dass dadurch der Bypass 16 durch die integrierte Ventilbaugruppe 4 ausbildet wird.

Das Bypassventil 6, welches wie FIG 1 zeigt elektrische Anschlüsse 12 für dessen Ansteuerung aufweist, sitzt dabei, wie die FIGen 1 und 2 zeigen, auf der Oberseite der zweiten, oberen Flanschplatte 8 und ist mit den entsprechenden Bypass-Bohrungen 23 in der zweiten, oberen Flanschplatte 8 verbunden. Das Bypass-Rohr 16 ist zwischen den beiden Flanschplatten 7, 8 angeordnet und steht dort mit den Bypass-Bohrungen 23 in Verbindung.

Weiter ist an der unteren Flanschplatte 7 ein Zu-/Abführstutzen 17 - strömungstechnisch mit der dortigen zentralen Bohrung 21 verbunden - angeflanscht, was der Zu-/Abführung des Betriebsgases 2 zur bzw. weg von der integrierten Ventilbaugruppe 4 dient.

Die integrierte Ventilbaugruppe 4 kann dabei, wie durch die Pfeile 11 verdeutlicht, in zwei Strömungsrichtungen 11 durchströmt werden.

Alle Komponenten der integrierten Ventilbaugruppe 4, welche auch Bestandteil der Betriebsmittelversorgungseinheit 3 ist, sind, wie beschrieben, in die beiden Flanschplatten 7, 8 integriert (und nutzen diese gemeinsam), wodurch sich eben diese integrierte Baugruppe 4 ausbildet - und diese damit diese als Ganzes "handle-bar", d.h. montierbar bzw. demontierbar, wird bzw. ist.

Die integrierte Ventilbaugruppe 4 weist, wie die FIGen 1 und 2 auch zeigen, verschiedene Verschraubungsbohrungen 14 in den beiden Flanschplatten 7, 8 sowie ein Verschraubungselement 13 an dem Ventilkörper 20 auf, über welche sich die integrierte Ventilbaugruppe 4 an einer Platte (nicht dargestellt) des Brennstoffzellenblocks 1 (nicht dargestellt) anschrauben bzw. befestigen lässt.

Die integrierte Ventilbaugruppe 4, wie beschrieben, dient über die reine Absperrung der Betriebsgaszuführung hinaus dem Schutz des Brennstoffzellenblocks 1 vor Druck bedingten Schädigungen bei größeren Druckdifferenzen zwischen der Betriebsgasversorgung und dem Brennstoffzellenblock 1.

Im Normalbetrieb wird - bei geöffnetem Haupt- bzw. Kugelventil 5 und geschlossenem Bypassventil 6 - das Betriebsgas 2 über den dortigen Hauptdurchfluss 15 durch die integrierte Ventilbaugruppe 4 - und von dort in den Brennstoffzellenblock 1 - geführt.

Bildet sich, beispielsweise bei Druckentlastung des Brennstoffzelleblocks 1, eine Druckdifferenz zu der Betriebsgaszuführung aus, droht dem Brennstoffzellenblock 1 bei Öffnung des Hauptventils 5 ein Druckstoß, welcher dort zu Schädigungen führen kann.

Stellt eine Sensorik eine solche Druckdifferenz fest, bleibt das Haupt- bzw. Kugelventil 5 geschlossen.

Das Bypassventil 6 wird nun geöffnet, wodurch die Druckdifferenz vor und nach der integrierten Ventilbaugruppe 4 bzw. der Betriebsgaszuführung über den Bypass 16 allmählich abgebaut wird.

Ist die Druckdifferenz abgebaut, wird das Bypassventil 6 wieder geschlossen und das Haupt- bzw. Kugelventil 5 geöffnet.

FIG 3 und FIG 4 zeigen jeweils den Aufbau einer weiteren integrierten Ventilbaugruppe 4 sowie die dortige Betriebsgas-Zu- bzw. Durchführung in entsprechend vereinfachter Detaildarstellung wie FIG 2.

Wie FIG 3 zeigt, ist hier auch, d.h. wie auch das Haupt- bzw. Kugelventil 5, das Bypassventil 6 - bei entsprechenden Bypassbohrungen 23 in den beiden Flanschplatten 7, 8 - zwischen den beiden Flanschplatten 7, 8, dort parallel zu dem Haupt- bzw. Kugelventil 5, angeordnet.

Hierdurch, d.h. nach Ausgestaltung gemäß FIG 3, kann eine noch kompaktere Bauform der integrierten Ventilbaugruppe 4 erreicht werden, als welche durch die integrierte Ventilbaugruppe 4 nach FIGen 1 und 2 möglich ist.

Nach der Ausgestaltung der integrierten Ventilbaugruppe 4 in FIG 4 ist das Haupt- bzw. Kugelventil 5 zwischen den beiden Flanschplatten 7, 8 angeordnet, wohingegen das Bypassventil 6 - bei entsprechenden Bypassbohrungen 23 in den beiden Flanschplatten 7, 8 und daran angeschlossenen Bypassschläuchen 24 - seitlich zu den beiden Flanschplatten 7, 8 angeordnet ist.

Hierdurch, d.h. nach Ausgestaltung der integrierten Ventilbaugruppe 4 gemäß FIG 4, kann eine einfache Zugänglichkeit an das Bypassventil ermöglicht werden.

In Funktion und Wirkweise sind alle Ausgestaltungen von Ventilbaugruppen 4 identisch.

Die Ausgestaltungen von integrierten Ventilbaugruppen 4 bei Brennstoffzellenblöcken 1 gehen von der Überlegung aus, dass ein Reparaturaufwand bei dem Brennstoffzellenblock 1 umso höher ist, je mehr einzelne und separat eingebaute bzw. einzubauende Bauteile bei dem Brennstoffzellenblock 1 vorhanden sind. Insbesondere bei zahlreichen, zum Teil hochkomplexen und fehleranfälligen Bauteilen der Betriebsmittelversorgungseinheit 3 eines Brennstoffzellenblocks 1 spielt diese Überlegung eine wesentliche Rolle.

Ausgehend davon sehen die Ausgestaltungen von Ventilbaugruppen 4 eine Zusammenfassung von, insbesondere technisch, funktionell, technisch-funktionell und/oder organisatorisch zusammengehörigen Bauteilen, wie hier die für die Betriebsgaszuführung und Druckschutz zusammenwirkenden Haupt- bzw. Bypassventile 5, 6, zu einer Bauteilgruppe 4 bzw. zu einem Modul 4 vor.

Diese Ventilbauteilgruppen 4 vereinfachen nicht nur einen Aufbau des Brennstoffzellenblocks 1, sondern ermöglichen, dass diese "von außen" - als Ganzes - gut zugänglich in ein Betriebsteil bzw. in den Brennstoffzellenblock 1 eingebaut und im Versagensfall - auch vor Ort bei einem Kunden - mit geringem Aufwand ausgebaut bzw. gewechselt werden können.

Damit verkürzt sich, auch weil ein Rücktransport des Brennstoffzellenblocks 1 zum Hersteller entfallen kann, eine Ausfallszeit einer solchen Bauteilgruppe 4, was Zeit und Kosten spart.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Brennstoffzellenblock (1) mit einer den Brennstoffzellenblock (1) mit einem Betriebsmittel (2) versorgenden Betriebsmittelversorgungseinheit (3)
**dadurch gekennzeichnet, dass** die Betriebsmittelversorgungseinheit (3) eine integrierte Ventilbaugruppe (4) mit mindestens einem ersten Ventil (5) und einem zweiten Ventil (6) aufweist, wobei das erste und das zweite Ventil (5, 6) in gemeinsam genutzte Anschlusselemente (7, 8) integriert sind.

2. Brennstoffzellenblock (1) nach mindestens einem der voranstehenden Ansprüche,
**dadurch gekennzeichnet, dass** das erste Ventil (5) ein Hauptventil (5) und das zweite Ventil (6) ein zu dem Hauptventil (5) zugehöriges Bypassventil (6) sind.

3. Brennstoffzellenblock (1) nach mindestens dem voranstehenden Anspruch,
**dadurch gekennzeichnet, dass** das Hauptventil (5) ein Kugelventil und/oder das Bypassventil (6) ein elektromagnetisch betätigbares Ventil sind/ist.

4. Brennstoffzellenblock (1) nach mindestens dem voranstehenden Anspruch,
**dadurch gekennzeichnet, dass** die gemeinsam genutzten Anschlusselemente (7, 8) zwei Flanschplatten (7, 8) sind, zwischen welchen zumindest eines der beiden Ventile (5, 6) angeordnet ist.

5. Brennstoffzellenblock (1) nach mindestens dem voranstehenden Anspruch,
**dadurch gekennzeichnet, dass** das erste und das zweite Ventil (5, 6) zwischen den zwei, gemeinsam genutzten Flanschplatten (7, 8) angeordnet sind.

6. Brennstoffzellenblock (1) nach mindestens dem voranstehenden Anspruch,
**dadurch gekennzeichnet, dass** das Betriebsmittel (2) ein unter Druck stehendes Betriebsgas (2), insbesondere Wasserstoff oder Sauerstoff, ist.

7. Brennstoffzellenblock (1) nach mindestens dem voranstehenden Anspruch,
**dadurch gekennzeichnet, dass** in den Anschlusselementen (7, 8) Betriebsmitteldurchführungen (9, 21, 22, 23) für das Betriebsmittel (2) angeordnet sind, wobei das erste und/oder das zweite Ventil (5, 6) an den Betriebsmitteldurchführungen (9, 21, 22, 23) angeschlossen sind.

8. Brennstoffzellenblock (1) nach mindestens dem voranstehenden Anspruch,
**dadurch gekennzeichnet, dass** an den Anschlusselementen (7, 8) Betriebsmittelzuführungen (24) für das Betriebsmittel (2) angeordnet sind, wobei das erste und/oder das zweite Ventil (5, 6) an den Betriebsmittelzuführungen (24) angeschlossen sind.

9. Brennstoffzellenblock (1) nach mindestens dem voranstehenden Anspruch,
**dadurch gekennzeichnet, dass** die Ventilbaugruppe (4) eine Hauptzuführung (15) für das Betriebsmittel (2) und einen Bypass (16) für das Betriebsmittel (2) aufweist, wobei das erste Ventil (5) eine Betriebsmittelzuführung der Hauptzuführung (15) beeinflusst und das zweite Ventil (6) eine Betriebsmittelzuführung im Bypass (16) beeinflusst.

10. Brennstoffzellenblock (1) nach mindestens dem voranstehenden Anspruch,
eingesetzt zu einem, insbesondere langsamen, Abbau einer Druckdifferenz in einer Betriebsmittelversorgung (18) vor und nach einem geschlossenen ersten Ventil (5), wobei das zweite Ventil (6) geöffnet wird, bei dem geschlossenen ersten Ventil (5) die Druckdifferenz in der Betriebsmittelversorgung (18), insbesondere langsam, über das geöffnete zweite Ventil (6) abgebaut wird und nach dem Abbau der Druckdifferenz das zweite Ventil (6) wieder geschlossen wird.
